# EUROPEAN PATENT APPLICATION

(11) **EP 4 628 306 A1**
(43) Date of publication of application: **08.10.2025**
(21) Application number: 25162738.6
(22) Date of filing: 10.03.2025
(51) Int. Cl.: B41J 2/165, B41J 2/21

(54) **DIAGNOSTIC AND DETECTION METHOD FOR INKJET PRINTS USING PAPER PRECOAT SOLUTIONS**

(30) Priority: 03.04.2024 US 202418626108
(71) Applicant: Xerox Corporation, Webster, NY 14580 (US)
(72) Inventor: PRAHARAJ, Seemit, Webster, 14580 (US); CONDELLO, Anthony S., Webster, 14580 (US); LEFEVRE, Jason M., Webster, 14580 (US); SAMBHY, Varun, Webster, 14580 (US); HERRMANN, Douglas K., Webster, 14580 (US); RAMESH, Palghat S., Webster, 14580 (US); ALVAREZ, Jorge A., Webster, 14580 (US); GULVIN, Peter M., Webster, 14580 (US); PETROPOULOS, Mark C., Webster, 14580 (US); STEURRYS, Christine A., Webster, 14580 (US); LINDSTROM, Brian, Webster, 14580 (US)
(74) Representative: Gill Jennings & Every LLP

(57) **Abstract**

A method for detecting missing or misdirected jets in a drop on demand delivery system for media priming in an inkjet printing application includes passing a diagnostic media in proximity to a first printhead may include a plurality of ejector jets. The method includes firing each of the plurality of jets onto the diagnostic media to deposit a precoat solution onto the diagnostic media in a first predetermined pattern, followed by depositing a plurality of droplets of at least one ink compositions onto the diagnostic media in a second predetermined pattern. An image of the diagnostic sheet can be captured and the printed pattern analyzed to detect missing or misdirected jets of a printhead configured to deposit a precoat solution or a primer solution.

## Description

### TECHNICAL FIELD

The present teachings relate generally to a system and method for precoating paper and, more particularly, to detection of precoat system functionality using diagnostic sheets and analysis methods.

### BACKGROUND

Digital aqueous ink jet (AIJ) printing is an area of growth for several production class printing systems. Printers or consumers of printed materials making or considering a transition from a dry powder (electrophotographic) printing system to an aqueous ink jet printing system or printing press require the maintenance of existing image quality (IQ), including such attributes as vibrancy and controlled spread in fine features while reducing run cost per kiloprint (kp). Exemplary printing systems using the aqueous ink jet printing methods have significantly improved print image quality matching or exceeding current electrophotographic printing methods.

The image quality of aqueous ink images printed onto various types of media varies according to the type of media being printed. Image quality is typically exemplary when the aqueous ink is printed onto offset coated, non-glossy media because the ink remains on top of the coating. Aqueous ink printing onto uncoated, porous media, however, produces washed out, poorer quality images because the inks are absorbed into the fibers of the paper. To avoid this consequence, coatings can be applied to porous media to reduce the absorption of the inks into the media. Primers, also known as precoat solutions, reduce the interaction of the inks with the media since the primer is interposed between the media and the inks. Because the ink image is fixed to the primer layer rather than the media, the ink image can be more easily removed. The ease of ink image removal from media can be a significant factor in recycling printed media. In systems using inkjet printheads to apply primer, or precoat solutions, to print media, it is important to understand and provide mitigation interventions for missing or misdirected jets in a precoat application system.

Therefore, it is desirable to develop or design methods or systems to detect uniformity and placement of precoat solution on print media in aqueous based ink jet printing systems.

### SUMMARY

The following presents a simplified summary in order to provide a basic understanding of some aspects of one or more embodiments of the present teachings. This summary is not an extensive overview, nor is it intended to identify key or critical elements of the present teachings, nor to delineate the scope of the disclosure. Rather, its primary purpose is merely to present one or more concepts in simplified form as a prelude to the detailed description presented later.

A method for detecting missing or misdirected jets in a drop on demand delivery system for media priming in an inkjet printing application is disclosed. The method includes passing a diagnostic media in proximity to a first printhead may include a plurality of ejector jets. The method also includes firing each of the plurality of jets onto the diagnostic media. The method also includes depositing a precoat solution onto the diagnostic media in a first predetermined pattern. The method also includes passing the diagnostic media in proximity to at least a second printhead may include a plurality of ejector jets. The method also includes depositing a plurality of droplets of at least one ink compositions onto the diagnostic media in a second predetermined pattern. The method also includes capturing an image of a printed pattern on the diagnostic media. Implementations of the method for detecting missing or misdirected jets in a drop on demand delivery system for media priming in an inkjet printing application may include analyzing the printed pattern of the captured image and comparing the printed pattern of the captured image to the second predetermined pattern. The method for detecting missing or misdirected jets in a drop on demand delivery system for media priming in an inkjet printing application may include performing a maintenance procedure to correct a primer printhead defect. The method for detecting missing or misdirected jets in a drop on demand delivery system for media priming in an inkjet printing application. The image of the printed pattern on the diagnostic media is captured with a scanner that is inline with respect to a printing process path. The diagnostic media further may include a trigger pattern configured to send a signal to an inline scanner. The diagnostic media may include uncoated paper. The first predetermined pattern may include a plurality of dashes. The dashes are parallel lines. The parallel lines are from about 2 to about 5 pixels apart from one another. The dashes are not parallel lines. The dashes are from about 2 to about 20 pixels apart from one another. The first predetermined pattern and the second predetermined pattern are the same. Depositing a plurality of droplets of at least one ink compositions onto the diagnostic media in a second predetermined pattern may include depositing a plurality of droplets of at least four ink compositions. The precoat solution may include 5 % wt to 40 % wt of a salt in an aqueous solution based on a total weight of the aqueous solution.

Another method for detecting missing or misdirected jets in a drop on demand delivery system for media priming in an inkjet printing application is disclosed, which includes passing a diagnostic media in proximity to a first printhead may include a plurality of ejector jets. The method also includes firing each of the plurality of jets onto the diagnostic media. The method also includes depositing a precoat solution onto the diagnostic media in a first predetermined pattern may include a plurality of dashes. The method also includes passing the diagnostic media in proximity to at least a second printhead may include a plurality of ejector jets. The method also includes depositing a plurality of droplets of at least one ink compositions onto the diagnostic media in a second predetermined pattern may include a plurality of dashes that is the same as the first predetermined pattern. The method also includes capturing an image of a printed pattern on the diagnostic media. The method also includes analyzing the printed pattern of the captured image. The method also includes comparing the printed pattern of the captured image to the second predetermined pattern. Implementations of the method for detecting missing or misdirected jets in a drop on demand delivery system for media priming in an inkjet printing application can include where the precoat solution may include 5 % wt to 40 % wt of a salt in an aqueous solution based on a total weight of the aqueous solution.

Another method for detecting missing or misdirected jets in a drop on demand delivery system for media priming in an inkjet printing application is disclosed, including passing a diagnostic media in proximity to a first printhead may include a plurality of ejector jets. The method also includes firing each of the plurality of jets onto the diagnostic media. The method also includes depositing a precoat solution onto the diagnostic media in a first predetermined pattern. The method also includes passing the diagnostic media in proximity to at least a second printhead may include a plurality of ejector jets. The method also includes depositing a plurality of droplets of at least four ink compositions onto the diagnostic media in a second predetermined pattern that may include a composite image. The method also includes capturing an image of a printed pattern on the diagnostic media. Implementations of the method for detecting missing or misdirected jets in a drop on demand delivery system for media priming in an inkjet printing application can include where the diagnostic media further may include a trigger pattern configured to send a signal to an inline scanner, and the diagnostic media may include uncoated paper. The precoat solution can include 5 % wt to 40 % wt of a salt in an aqueous solution based on a total weight of the aqueous solution.

The features, functions, and advantages that have been discussed can be achieved independently in various implementations or can be combined in yet other implementations further details of which can be seen with reference to the following description.

### BRIEF DESCRIPTION OF THE DRAWINGS

The accompanying drawings, which are incorporated in and constitute a part of this specification, illustrate embodiments of the present teachings and together with the description, serve to explain the principles of the disclosure. In the figures:
FIG. 1 is a schematic diagram of a system and method for pre-coating paper prior to ink jet printing, in accordance with the present disclosure.
FIG. 2 is a schematic of an exemplary pattern for jet detection in a printhead jetting a clear priming solution, in accordance with the present disclosure.
FIG. 3 is a schematic of the exemplary pattern from FIG. 2 depicting a situation where the printhead jetting a clear priming solution has numerous missing jets, in accordance with the present disclosure.
FIGS. 4A-4D are enlarged images of examples of two single pixel dashes, three pixels apart, on a variety of printing media examples, in accordance with the present disclosure.

It should be noted that some details of the figures have been simplified and are drawn to facilitate understanding of the present teachings rather than to maintain strict structural accuracy, detail, and scale.

### DETAILED DESCRIPTION

Reference will now be made in detail to exemplary embodiments of the present teachings, examples of which are illustrated in the accompanying drawings. Wherever possible, the same reference numbers will be used throughout the drawings to refer to the same, similar, or like parts.

The method described herein provides a simple and effective way to detect missing or misdirected jets in a drop-on-demand delivery system for media priming in an inkjet printing application. By using a colorless precoat solution or primer and capturing an image of a printed pattern, it is possible to quickly and accurately identify any issues with the printer and take corrective action as needed. A first predetermined pattern deposited onto the diagnostic media using a precoat solution can be any design or configuration that allows for easy detection of missing or misdirected jets during the printing process. This pattern can comprise a series of dashes or lines, which are parallel or non-parallel depending on the specific implementation. The distance between these lines can vary, with the goal being to create a pattern that is easily distinguishable when ink is used to construct the printed pattern.

After the first predetermined pattern has been deposited onto the diagnostic media using colorless precoat solution, or primer, it is passed in proximity to at least a second printhead comprising a plurality of ejector jets. This printhead deposits a plurality of droplets of at least one ink composition onto the diagnostic media in a second predetermined pattern. The specific design or configuration of this second pattern will depend on the desired printed image, but it can be different from the first predetermined pattern to allow for easy detection of any misalignments during printing.

Once both the first and second patterns have been deposited onto the diagnostic media, an image of the completed printed pattern is captured using a scanner that can be inline with respect to the printing process path. This allows for accurate and efficient analysis of the printed pattern, which can then be compared to the first predetermined pattern to determine if any misalignments or missing jets occurred during the printing process. In certain implementations, the scanner need not be inline, or integrated with the printing process path, and the analysis of the completed print can be conducted offline.

The precoat solution used in this method can be any suitable solution that helps ensure even coverage of the first predetermined pattern onto the diagnostic media or under normal printing operating conditions. In one example, the precoat solution comprises 5% wt to 40% wt of a salt in an aqueous solution based on a total weight of the aqueous solution. Additional details related to the precoat solution or primer are described in greater detail herein.

The precoat solution, also referred to as a precoat composition, precoat, primer, or primer solution, can include an aqueous salt solution that improves ink adhesion and de-inkability by "crashing" the ink pigment portion of the ink composition and preventing it from sinking or diffusing into the bulk of the paper. As used in this document, the term "primer" or "precoat" can be defined as coatings or solutions that are applied to media to improve the image quality of the ink images over that which is achieved without the coatings. The use of a salt solution as a precoat solution has several advantages, including low material cost and the ability to improve print quality on both coated and uncoated paper. The effect of "crashing," precipitating, or causing the precipitation of a component of an ink can include any single chemical or combination of chemicals in relation to a printed ink or other printing related fluid that can facilitate the desolubilization or precipitation of one or more components in the ink. The desolubilizing can be accomplished by proton transfer from collision or close proximity of a crashing agent with one or more of the ink components. The desolubilizing can be caused by component associations induced by a combination of a precoat solution and/or component associations occurring with the precoat solution.

The mechanism by which the precoat solution crashes or causes the precipitation of the ink pigments at the surface is alternatively reasoned to be via the breaking of the surface tension of the ink which causes the pigments, dyes, or other components to precipitate and adhere to the surface of the paper. The use of a hydrophobic compliant roller system under pressure improves the application of the precoat solution by providing a uniform and consistent coating of the solution on the paper. The roller applies pressure to the solution, which helps to evenly distribute the solution, thus ensuring that the solution sufficiently covers all areas of the paper. For the purposes of this disclosure, any suitable print media, such as paper or another printable substrate, such as, but not limited to coated paper, uncoated paper, plastic films, plastic sheets, fabrics, or other printable materials can be used interchangeably. Typically, when a precoat solution, primer, ink or other material is deposited on a substrate, a first side of the substrate is commonly facing the hydrophobic compliant application member, the printheads or any other printing system component that modifies the first side or first surface of the substrate or paper. A second side may subsequently undergo a similar process, during which time it may be considered as a second side of a substrate or paper, which is a common practice when printing in duplex mode for a printing system.

Potential drawbacks or limitations of using a salt solution as a precoat solution can include the possibility of damaging the paper if too much salt is applied, or too high a content of salt is included in the salt solution, leading to the possibility of the solution being or becoming too concentrated, thus causing the ink density to increase. The precoat solution can be adjusted to improve its effectiveness on different types of paper by varying the concentration of the salt solution and the number of passes through the system. The number of passes through the system can affect the amount of salt in the precoat solution by increasing the concentration of the solution on the surface of the paper. The amount of precoat can alternatively be adjusted by deposition parameters in the print head.

Precoat solutions of the present teachings may alternatively be used with other types of inks, such as dye-based inks, but the precoat solutions may not be as effective in improving the quality of the print. The precoat solution can be compared to other pre-coating methods, such as those used in competitive products, by providing a simpler and more cost-effective solution. It also provides improved IQ metrics and de-inking capabilities.

In examples, the precoat solution and application system can be used with other types of paper surfaces, substrates, or coatings, such as UV coatings or laminates, but it may not be as effective in improving the quality of the print as when used with uncoated papers. The use and application of a precoat solution can impact the print quality and durability of the final print by improving the IQ metrics and de-inking capabilities, which can lead to a higher-quality print. The precoat solution may be used with different types of printing equipment, such as digital printers or offset presses, but it may require some modifications to the equipment to ensure that it works effectively in such equipment.

In essence, the precoat application system is configured to apply a precoat solution, disposed on at least a portion of a surface of the media, wherein a printhead delivers a quantity of precoat solution to a surface of media, in some examples, paper or other sheet or web delivered substrate, when the media is passed in proximity to a printhead configured to jet or eject a plurality of droplets of precoat solution, and the precoat solution is deposited on the surface of the paper to obtain a uniform coating of the precoat solution on the surface of the paper. In examples, of the diagnostic method described herein, the precoat may be deposited in one or more predetermined patterns. In examples, the precoat solution can include an aqueous salt solution. For example, the precoat solution can include magnesium chloride, calcium nitrate, barium, any water soluble salt of Ca²⁺, Mg²⁺, Ba²⁺, B³⁺, Al³⁺, or combinations thereof. In essence, divalent or trivalent cations are the active species included in a precoat solution. They destabilize one or more of the ink components, colloids, latex, pigments, and the like, and cause them to precipitate out of suspension or dispersion within the ink composition. A representative primer, primer solution, or precoat solution composition can be found in Table 1. All values are represented in % by weight of a total precoat solution or primer composition.

**Table 1: Representative Precoat (Primer) Solution Composition**

| **Chemical** | **Amt in 1kg** | **% by wt** | **Suitable Range (% by wt)** |
|---|---|---|---|
| Glycerol | 21.8 | 2.2 | 0 -5 |
| Propylene Glycol, (can also include other cosolvents like butanediol, pentanediol, hexanediol, glycol ethers like diethylene glycol monoethyl ether, dipropylene glycol methyl ether, similar to cosolvents that may be present in ink formulations) | 197.7 | 19.8 | 10-40 |
| Water | 509 | 50.9 | 30-70 |
| Magnesium Nitrate Hexahydrate (can also include other metal salts as described herein) | 270 | 27.0 | 10-50 |
| Surfactant TT4000 | 7 | 0.7 | 0.1 - 3 |
| Biocide Proxel | 1.45 | 0.1 | 0.1 -1 |

In an example, the precoat solution comprises a magnesium chloride solution in water, where in any case, the precoat solution can include 5 % wt to 40 % wt of a salt in an aqueous solution based on a total weight of the aqueous solution. Other examples include from about 1% wt to about 50% wt, or from about 10% wt to about 50% wt, or from about 10% wt to about 20% wt of a salt in an aqueous solution based on a total weight of the aqueous solution.

For a general understanding of the environment for the printer and the printer operational method disclosed herein as well as the details for the printer and the printer operational method, reference is made to the drawings. In the drawings, like reference numerals have been used throughout to designate like elements. As used herein, the word "printer" encompasses any apparatus that ejects ink drops onto different types of media to form ink images.

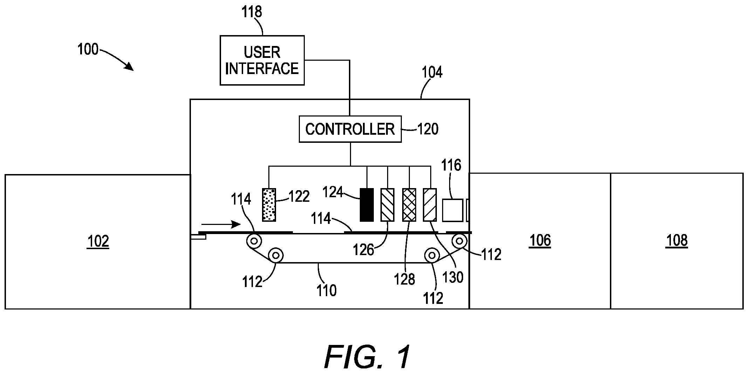

FIG. 1 is a schematic diagram of a system and method for pre-coating paper prior to ink jet printing, in accordance with the present disclosure. The system and method for pre-coating paper prior to ink jet printing can be integrated in entirety, or in part, into a high-speed color inkjet printer 100. The system and method of the present disclosure includes a diagnostic sheet and method of detecting missing or misdirected jets. FIG. 1 depicts a high-speed color inkjet printer 100 that uses a primer measuring method in conjunction with a diagnostic sheet to identify accurately the location of precoat solution or primer applied to media in the printer to enable media to be treated with primers effectively and efficiently. More specifically, the primer measuring method and diagnostic sheet can provide an indication of missing locations of application of precoat solution. As illustrated, the printer 100 is a printer that directly forms an ink image on a surface of a media sheet stripped from one of the supplies of media sheets stored within a paper feeder 102 and the sheets are moved through the printer 100 in a process direction (as indicated by a directional arrow) by a controller 120 operating one or more of the actuators that are operatively connected to rollers or to at least one driving roller of conveyor that comprise a portion of the media transport 110 that passes through the print engine module 104 of the printer. In one example, each printhead module has only one printhead that has a width that corresponds to a width of the widest media in the cross-process direction that can be printed by the printer. In other examples, the printhead modules have a plurality of printheads with each printhead having a width that is less than a width of the widest media in the cross-process direction that the printer can print. In these modules, the printheads are arranged in an array of staggered printheads or a linear array of printheads that abut one another to enable media wider than a single printhead to be printed. Additionally, the printheads within a module or between modules can also be interlaced so the density of the drops ejected by the printheads in the cross-process direction can be greater than the smallest spacing between the inkjets in a printhead in the cross-process direction. The printer 100 can be configured with three or more sheet supplies, each containing a different type or size of media.

With further reference to FIG. 1, the printed image exits the print engine module 104 having a print zone of printer 100 and passes under one or more image dryers 106 after the ink image is printed on a sheet, represented herein as a more generic media 114. As used in this document, the term "print zone" means an area of a media transport opposite the printheads of an inkjet printer. The image dryer 106 can include an infrared heater, a heated air blower, air returns, or combinations of these components to heat the ink image and at least partially fix an ink image to the sheet. An infrared heater applies infrared heat to the printed image on the surface of the sheet to evaporate water or solvent in the ink. The heated air blower directs heated air using a fan or other pressurized source of air over the ink to supplement the evaporation of the water or solvent from the ink. The air is then collected and evacuated by air returns to reduce the interference of the dryer air flow with other components in the printer. In normal printing operations, the media 114 or sheet is jetted upon with ink or primer or precoat solution in an imagewise fashion and transported through the print zone to create a multicolor image. In examples of the present disclosure, the media 114 includes a diagnostic sheet for measuring or detecting missing or mis-directed jets in a printhead configured to dispose or apply precoat solution or primer to the diagnostic sheet.

Prior to reaching the print zone, the media 114 passes beneath a precoat, or primer application module 122. The primer application module 122 includes one or more printheads configured as described previously. These printheads ejected drops of primer onto the media prior to the media being printed by the printhead modules 124, 126, 128, and 130. The location and presence of primer applied to the media 114 is measured by a detector 116. In examples, the detector 116 can be inline and positioned within the printing system 100 or can be external to the printer 100, such that a diagnostic sheet can be evaluated offline. The signal generated by the detector can be a visual signal, perceptible by an operator, or provided to the controller 120 via an inline scanner, image analysis or detector. An inline scanner is considered to be inline with respect to the process such that scanning can occur within a printing machine during normal operation and without undue interruption. Alternate examples can have the diagnostic sheet being taken offline to an external scanner or other image capture or analysis station known to those skilled in the art for further detection or analysis. The controller 120 is configured with programmed instructions stored in non-transitory, computer readable media that when executed cause the controller to identify the amount and thickness of primer on the media and adjust the operation of the primer application module 122 to correct the application of the primer for the type of media being printed in normal operation, or indicate a need for a manual operation or intervention by a machine operator. The mechanism of the diagnostic sheet is described in further detail herein.

In examples of a printer 100 as shown and described herein, a return path for printing duplex, or two-sided images can be employed, as well as an accompanying duplex path and controller instructions as needed. FIG. 1 also shows the printed sheets or diagnostic media as being collected in the output module 108, but in examples, they can be directed to other processing stations (not shown) that perform tasks such as folding, collating, binding, and stapling of the media sheets.

Operation and control of the various subsystems, components and functions of the machine or printer 100 are performed with the aid of a controller or electronic subsystem (ESS) 120. The ESS or controller 120 is operatively connected to the components of the printhead modules 122, 124, 126, 128, and 130 (and thus the printheads), the detector, the image dryer 106, output module 108 and other system components not necessarily shown herein for purposes of clarity. The ESS or controller 120, for example, is a self-contained computer having a central processor unit (CPU) with electronic data storage, and a display or user interface (UI) 118. The ESS or controller 120, for example, includes a sensor input and control circuit as well as a pixel placement and control circuit. In addition, the controller 120 reads, captures, prepares, and manages the image data flow between image input sources, such as a scanning system or an online or a work station connection (not shown), and the printhead modules 122, 124, 126, 128, and 130. As such, the ESS or controller 120 is the main multi-tasking processor for operating and controlling all of the other machine subsystems and functions, including the printing process.

The controller 120 can be implemented with general or specialized programmable processors that execute programmed instructions. The instructions and data required to perform the programmed functions can be stored in non-transitory, computer readable medium associated with the processors or controllers. The processors, their memories, and interface circuitry configure the controllers to perform the operations described below when the programmed instructions are executed. These components can be provided on a printed circuit card or provided as a circuit in an application specific integrated circuit (ASIC). Each of the circuits can be implemented with a separate processor or multiple circuits can be implemented on the same processor. Alternatively, the circuits can be implemented with discrete components or circuits provided in very large scale integrated (VLSI) circuits. Also, the circuits described herein can be implemented with a combination of processors, ASICs, discrete components, or VLSI circuits.

In operation, image content data for an image to be produced are sent to the controller 120 from either a scanning system or an online or work station connection for processing and generation of the printhead control signals output to the printhead modules 122, 124, 126, 128, and 130. Along with the image content data, the controller receives print job parameters that identify the media weight, media dimensions, print speed, media type, ink area coverage to be produced on each side of each sheet, location of the image to be produced on each side of each sheet, media color, media fiber orientation for fibrous media, print zone temperature and humidity, media moisture content, and media manufacturer. As used in this document, the term "print job parameters" means non-image content data for a print job and the term "image content data" means digital data that identifies an ink image to be printed on a media sheet.

In examples of the present disclosure, the printer can employ a method for detecting missing or misdirected jets in such a drop on demand delivery system for media priming in an inkjet printing application, the method steps including passing a diagnostic media in proximity to a first printhead comprising a plurality of ejector jets, firing each of the plurality of jets onto the diagnostic media, depositing a precoat solution onto the diagnostic media in a first predetermined pattern, passing the diagnostic media in proximity to at least a second printhead comprising a plurality of ejector jets, depositing a plurality of droplets of at least one ink compositions onto the diagnostic media in a second predetermined pattern, and capturing an image of a printed pattern on the diagnostic media. In examples, the precoat solution can include from about 5 % wt to about 40 % wt of a salt in an aqueous solution, as well as other compositional parameters or ingredients as described herein. In examples, the method can include analyzing the printed pattern of the captured image, and comparing the printed pattern of the captured image to the second predetermined pattern. The particular details of these predetermined patterns are described in further detail herein.

Depending on the detection or determination of missing or misdirected jets, the performance of one or more maintenance procedures can be conducted to correct a primer printhead defect. Examples of a maintenance procedure to correct a primer printhead defect can include cleaning a face of the first printhead, performing a maintenance jetting procedure using the first printhead, flushing the first printhead, replacing the first printhead, or a combination thereof. In examples, an image of the printed pattern on the diagnostic media can be captured with a scanner that is inline with respect to a printing process path. The diagnostic media can alternatively include a trigger pattern configured to send a signal to an inline scanner. This signal reports to the inline scanner or another detector that a diagnostic print or a piece of diagnostic media is forthcoming. In examples, the detection or analysis does not necessarily need to be with the use of an inline scanner, for example, it could take the form of offline detection in which a print is printed and scanned using a high resolution offline scanner which generates the missing jet tables for the printer to use. In other examples, the detection could also take the form of a visual inspection and manual entering and repair of missing jets.

The method of the present disclosure may also include performing a maintenance procedure to correct any defects in the primer printhead. This could involve cleaning the face of the first printhead, performing a maintenance jetting procedure using the first printhead, flushing the first printhead, replacing the first printhead, or a combination thereof. These steps help ensure that the printing process is as efficient and accurate as possible.

In some examples, the diagnostic media comprises uncoated paper, which can optionally include or incorporate a first predetermined pattern having a plurality of dashes. These dashes, in certain examples, can be parallel lines. These parallel lines can be from about 2 to about 5 pixels apart from one another, or from about 1 to about 15 pixels, or from about 2 to about 20 pixels apart from one another. In other examples, the lines can be proportional to ink spread. For example, if ink spread is high, the separation between the lines for such a detection could be on a higher end of the range, if the ink spread is low the separation between the lines will be on the lower end of the range. In some examples, the dashes are not parallel lines. A second, predetermined pattern can be the same or different predetermined pattern as compared to the first predetermined pattern. Typically, the first predetermined pattern is printed using a clear, colorless primer or precoat solution and the second predetermined pattern is printed with one or more colors of visible ink. For example, depositing a plurality of droplets of at least one ink compositions onto the diagnostic media in a second predetermined pattern comprises depositing a plurality of droplets of at least one, or up to four ink compositions. In some examples, up to six, eight, or ten ink colors can be deposited in the second predetermined pattern.

In examples where four or more colors are deposited, it can obscure issues with individual color print heads or jets when conducting a primer printhead evaluation by depositing multiple colors. Thus, if a certain ink color depositing printhead has issues with missing or misdirected jets, printing a composite color, such as "process black," a composite color using multiple colors to print a black pixel or image, will not impact the measurement or diagnostic method as directed towards evaluating a primer depositing printhead in the same system.

A typical inkjet printer uses one or more printheads. Each printhead typically contains an array of individual nozzles, or jets, for ejecting drops of ink across an open gap to an image receiving member to form an image. In examples of the present disclosure, an additional printhead can be added to the printing system to deposit a primer or precoat solution prior to or after the deposition of one or more colors of ink. The image receiving member may be a continuous web of recording media, a series of media sheets, or the image receiving member may be a rotating surface, such as a print drum or endless belt. Images printed on a rotating surface are later transferred to recording media by mechanical force in a transfix nip formed by the rotating surface and a transfix roller. In an inkjet printhead, individual piezoelectric, thermal, or acoustic actuators generate mechanical forces that expel ink through an orifice from an ink filled conduit in response to an electrical voltage signal, sometimes called a firing signal. The magnitude, or voltage level, of the signals affects the amount of ink ejected in each drop. The firing signal is generated by a printhead controller in accordance with image data. An inkjet printer forms a printed image in accordance with the image data by printing a pattern of individual ink drops at particular locations on the image receiving member. The locations where the ink drops landed are sometimes called "ink drop locations," "ink drop positions," or "pixels." Thus, a printing operation can be viewed as the placement of ink drops on an image receiving member in accordance with image data.

In order for the printed images to correspond closely to the image data, both in terms of fidelity to the image objects and the colors represented by the image data, the printheads must be registered with reference to the imaging surface and with the other printheads in the printer. Registration of printheads is a process in which the printheads are operated to eject ink in a known pattern and then the printed image of the ejected ink is analyzed to determine the orientation of the printhead with reference to the imaging surface and with reference to the other printheads in the printer. Operating the printheads in a printer to eject ink in correspondence with image data presumes that the printheads are level with a width across the image receiving member and that all of the inkjet ejectors in the printhead are operational. The presumptions regarding the orientations of the printheads, however, cannot be assumed, but must be verified. Additionally, if the conditions for proper operation of the printheads cannot be verified, the analysis of the printed image should generate data that can be used either to adjust the printheads so they better conform to the presumed conditions for printing or to compensate for the deviations of the printheads from the presumed conditions. It should be noted that when added to an inkjet printing system, a printhead used for the purpose of dispensing or ejecting primer follows these same principles of operation and maintains many of the same requirements, save for standard adjustments also applicable to the general printing of inks within such systems.

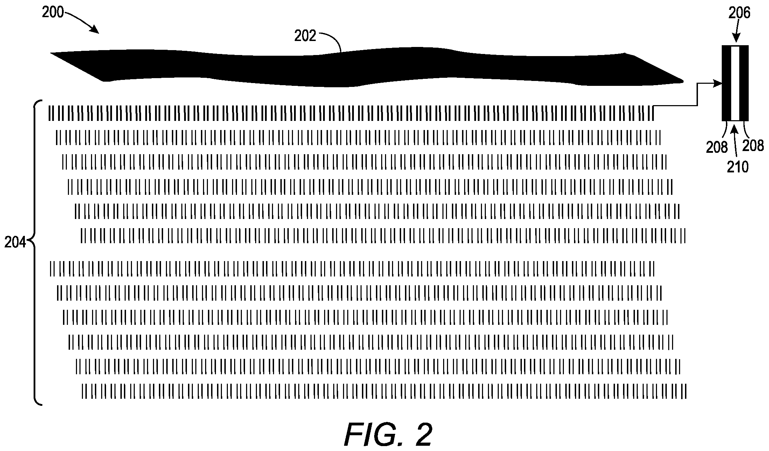

Analysis of printed images is performed with reference to two directions. "Process direction" refers to the direction in which the image receiving member is moving as the imaging surface passes the printhead to receive the ejected ink and "cross-process direction" refers to the direction across the width of the image receiving member. In order to analyze a printed image, a test pattern needs to be generated so determinations can be made as to whether the inkjets operated to eject ink did, in fact, eject ink and whether the ejected ink landed where the ink would have landed if the printhead was oriented correctly with reference to the image receiving member and the other printheads in the printer. In some printing systems, an image of a printed image is generated by printing the printed image onto media or by transferring the printed image onto media, ejecting the media from the system, and then scanning the image with a flatbed scanner or other known offline imaging device. This method of generating a picture of the printed image suffers from the inability to analysis the printed image in situ and from the inaccuracies imposed by the external scanner. In some printers, a scanner is integrated into the printer and positioned at a location in the printer that enables an image of an ink image to be generated while the image is on media within the printer or while the ink image is on the rotating image member. These integrated scanners typically include one or more illumination sources and a plurality of optical detectors that receive radiation from the illumination source that has been reflected from the image receiving surface. The radiation from the illumination source is usually visible light, but the radiation may be at or beyond either end of the visible light spectrum. If light is reflected by a white surface, the reflected light has the same spectrum as the illuminating light. In some systems, ink on the imaging surface may absorb a portion of the incident light, which causes the reflected light to have a different spectrum. In addition, some inks may emit radiation in a different wavelength than the illuminating radiation, such as when an ink fluoresces in response to a stimulating radiation. Each optical sensor generates an electrical signal that corresponds to the intensity of the reflected light received by the detector. The electrical signals from the optical detectors may be converted to digital signals by analog/digital converters and provided as digital image data to an image processor. While the test pattern shown and described as printed onto a diagnostic sheet in reference to FIG. 2, applies to the printing of a primer or precoat solution, the same principles relating to test patterns of ink having a visible color upon printing or ejecting apply to the present disclosure as well. It should be noted that while the primers or precoat solutions are colorless as stored and deposited, it is in combination with the surface layer of the one or more examples of diagnostic sheets as described herein that a visible or scannable or detectable colored pattern can be discerned.

The ability to differentiate dashes or other features of different ink colors, or precoat solution, provided an appropriate surface layer on a diagnostic sheet, is subject to the phenomenon of missing or weak inkjet ejectors. Weak inkjet ejectors are ejectors that do not respond to a firing signal by ejecting an amount of ink that corresponds to the amplitude or frequency of the firing signal delivered to the inkjet ejector. A weak inkjet ejector, instead, delivers a lesser amount of ink. Consequently, the lesser amount of ink or primer ejected by a weak jet covers less of the image receiving member so the contrast of the signal generated by the optical detector with reference to an uncovered portion of the image receiving member is lower. Therefore, ink drops or primer drops in a dash ejected by a weak inkjet ejector may result in an electrical signal having a magnitude that is different than that expected. Missing inkjet ejectors are inkjet ejectors that eject little or no ink in response to the delivery of a firing signal. A process for identifying the inkjet ejectors that fail to eject ink drops or primer for such test patterns is discussed in more detail below can be found in U.S. Patent Number 8,721,033, which is incorporated by reference herein. These concepts and methods can be applied to detecting and diagnosing issues in primer or precoat solution ejection when paired with an appropriate diagnostic sheet as described herein.

The printheads may be adjusted in the cross-process direction using actuators, such as electrical motors, that are operatively connected to a printhead or to a mounting member to which a printhead is mounted. These actuators are typically electro-mechanical devices that respond to control signals that may be generated by an appropriately configured controller. In one example, each printhead may be operatively connected to an independent actuator. In alternative examples, a group of two or more printheads, typically mounted to a single printhead bar, may be operatively connected to a single actuator to enable movement of the printhead group with the single actuator. All but one of the printheads are further mechanically coupled to independent secondary actuators, with the printhead not having an independent actuator being adjusted solely by the first actuator. This arrangement allows the first actuator to adjust all of the coupled printheads simultaneously, with the secondary independent actuators providing further adjustments to their respective printheads.

Another form of printhead alignment in the cross-process direction is known as stitch alignment. Stitch alignment occurs at the interface boundaries between adjacent printheads in a print array. Many printhead configurations arrange multiple printheads on different rows in a single array to span the entire cross-process width of an image receiving member that passes through the print zone. The multiple printheads are "stitched" together to form a seamless line in the cross process direction. Stitch error arises when a gap or overlap exists between edge nozzles of neighboring heads of the same color. Additional means of printhead alignment and correction are described herein in further detail.

The maintenance procedure performed in this method may be automated or require manual intervention depending on the specific implementation. Automation can improve efficiency and accuracy but may also increase costs and complexity. The inline scanner plays a useful role in detecting missing or misdirected jets by capturing an image of the printed pattern on the diagnostic media. The scanner or other detection system can be specifically configured to detect the first predetermined pattern and compare it to the second predetermined pattern, allowing for identification of any misalignments or missing jets during printing.

In order to ensure optimal performance and minimize the impact of defects on image quality, a maintenance procedure may be performed to correct any issues with the primer printhead. This procedure typically can involve cleaning the face of the first printhead, performing a maintenance jetting procedure using the first printhead, flushing the first printhead, replacing the first printhead, or a combination thereof. The specific steps involved in this maintenance procedure may vary depending on the severity and nature of the defects detected during the diagnostic process.

To begin a cleaning maintenance procedure, the face of a printhead may be cleaned using a suitable cleaning solution or method. This step helps to remove any debris, dust, or other contaminants that may have accumulated on the surface of the printhead, which can interfere with the proper application of the primer solution and result in defects during printing. Before or after cleaning the face of the first printhead, a maintenance jetting procedure may be performed using the first printhead. This involves firing each of the plurality of jets onto the diagnostic media in proximity to the first printhead, depositing a precoat solution onto the diagnostic media in a first predetermined pattern, and capturing an image of the printed pattern on the diagnostic media. The goal of this procedure is to verify that the primer solution is being applied correctly and evenly across the surface of the media, and to identify any issues with alignment or misdirected jets that may need to be corrected.

If any defects are detected during the maintenance jetting procedure, the printhead may need to be flushed to remove any residual primer solution or other contaminants that may have accumulated on the surface of the printhead. This can help ensure that the primer layer is applied consistently and uniformly across the media, resulting in improved image quality. In some cases, it may be useful to replace the first printhead if valuable defects are detected during the maintenance procedure. This may involve replacing the entire printhead or just the face of the printhead that is causing issues. Depending on the specific implementation and the severity of the defects, replacement of the first printhead may be performed as part of the routine maintenance schedule or on an as-needed basis. In some cases, a combination of these steps may be performed to correct issues with the primer printhead. For example, cleaning and flushing the printhead may be sufficient to resolve minor defects, while replacement of the printhead may be useful for more severe issues. The specific maintenance procedure will depend on the nature and severity of the defects detected during the diagnostic process.

The maintenance procedures and other means described or referred to herein for correcting primer printhead defects should be integrated into the overall diagnostic process to ensure that any issues are identified and addressed in a timely manner. This may involve running the diagnostic process on a regular schedule or as needed based on changes in the printing environment or other factors that may affect the performance of the printer.

Diagnostic media can be a useful component of the method described for detecting missing or misdirected jets in drop-on-demand delivery systems used for media priming in inkjet printing applications. The diagnostic media, which can be any suitable material that allows for easy detection of missing or misdirected jets during the printing process, is passed near a first printhead equipped with multiple ejector jets. Each of these jets is then fired onto the diagnostic media and deposits a precoat solution on it in the form of dashes. This pattern serves as a baseline for comparison to identify any misalignments or missing jets during the printing process.

FIG. 2 is a schematic of an exemplary pattern for jet detection in a printhead jetting a clear priming solution, in accordance with the present disclosure. The specific design or configuration of the diagnostic sheet 200 used for detecting missing or misdirected jets can be customized based on the specific printing application. A trigger pattern 202 on the diagnostic media can be a useful component of the method for detecting missing or misdirected jets in drop-on-demand delivery systems used for media priming in inkjet printing applications. This trigger pattern 202 is configured to send a signal to an inline scanner, which plays a functional role in accurately and efficiently analyzing the printed pattern on the diagnostic media. The trigger pattern 202 is placed in proximity to the first printhead that fires each of its jets onto the diagnostic media, depositing a precoat solution in a predetermined pattern. This trigger pattern 202 can be any design or configuration that allows for easy detection of missing or misdirected jets during the printing process. The predetermined pattern can comprise a series of dashes 204 or lines that are parallel, as shown herein, or non-parallel depending on the implementation. The distance between these lines can vary to create a pattern that is easily distinguishable from the printed pattern. This allows for accurate and efficient analysis of the printed pattern, which can then be compared to the first predetermined pattern to determine if any misalignments or missing jets occurred during the printing process.

The trigger pattern 202 is placed on the diagnostic media to ensure that it is accurately captured by the inline scanner as the printed pattern is being created. The specific design or configuration of this pattern will depend on the desired printed image, but it should be different from the first predetermined pattern to allow for easy detection of any misalignments during printing. By using a trigger pattern 202, it becomes possible to accurately and efficiently analyze the printed pattern on the diagnostic media, which can then be compared to the first predetermined pattern to determine if any misalignments or missing jets occurred during the printing process.

The inline scanner allows for accurate and efficient analysis of the printed pattern on the diagnostic media. The scanner is placed in line with respect to the printing process path, which enables it to capture an image of the printed pattern as the diagnostic media passes through the printer. This image is then analyzed using specialized software that compares it to the first predetermined pattern, allowing for easy detection of any misalignments or missing jets during the printing process. Other detection method may be used as well, such as visual inspection using one or more subjective image references that outline a ranges of defect levels based on known performance parameters.

Also depicted in FIG. 2 is an enlarged view of a primer dash 206, with a pair of color dashes 208, printed alongside the single primer dash 206. The integrity of the image quality of the gap 210 can be determined based on the image quality of the resulting group of color dashes 208 and primer dashes 206. As noted previously, the primer printed on the media aids in fixing, or "crashing" one or more components in an aqueous ink composition, thus providing image quality integrity where the primer has previously been deposited.

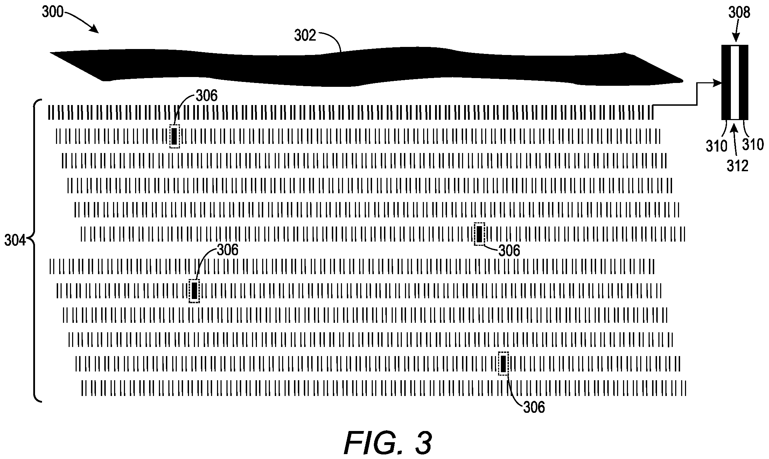

FIG. 3 is a schematic of the exemplary pattern from FIG. 2 depicting a situation where the printhead jetting a clear priming solution has numerous missing jets, in accordance with the present disclosure. A trigger pattern 302 on the diagnostic media 300 is configured to send a signal to an inline scanner, which plays a functional role in accurately and efficiently analyzing the printed pattern on the diagnostic media. The trigger pattern 302 is placed in proximity to the first printhead that fires each of its jets onto the diagnostic media, depositing a precoat solution in a predetermined pattern. The predetermined pattern can comprise a series of dashes 304 or lines that are parallel, as shown herein, or non-parallel depending on the implementation. Also depicted in FIG. 3 is an enlarged view of a primer dash 308, with a pair of color dashes 310, printed alongside the single primer dash 308. The integrity of the image quality of the gap 312 can be determined based on the image quality of the resulting group of color dashes 310 and primer dashes 308. As noted previously, the primer printed on the media aids in fixing, or "crashing" one or more components in an aqueous ink composition, thus providing image quality integrity where the primer has previously been deposited.

The diagnostic media used in this method can be uncoated paper, providing a cost-effective solution for detecting issues with the printer. This type of paper allows for easy detection of missing or misdirected jets by capturing an image of the printed pattern on the diagnostic media using a scanner that is inline with respect to the printing process path. The precoat solution used in this method ensures even coverage onto the diagnostic media by being applied in a predetermined pattern.

After a first predetermined pattern of primer has been deposited onto the diagnostic media, it is passed near at least one second printhead equipped with multiple ejector jets printing visible, colored ink. This printhead deposits a plurality of droplets of at least one ink composition onto the diagnostic media in a second predetermined pattern. The specific design or configuration of this second pattern will depend on the desired printed image, but it should be different from the first predetermined pattern to allow for easy detection of any misalignments during printing. As shown and described in FIGS. 2 and 3, the first predetermined pattern call for the deposition of primer in a similar location as the subsequently printed second predetermined pattern, calling for a deposition of a colored ink, as separated by a distance of from about 2 to about 20 pixels.

Once both the first and second patterns have been deposited onto the diagnostic media, an image of the printed pattern is captured using a scanner that is inline with respect to the printing process path. This allows for accurate and efficient analysis of the printed pattern, which can then be compared to the first predetermined pattern to determine if any misalignments or missing jets occurred during the printing process. If the intended separation between dashes of colored in k in the second predetermined pattern is not detected, it can be an indication of the absence of primer in that particular location.

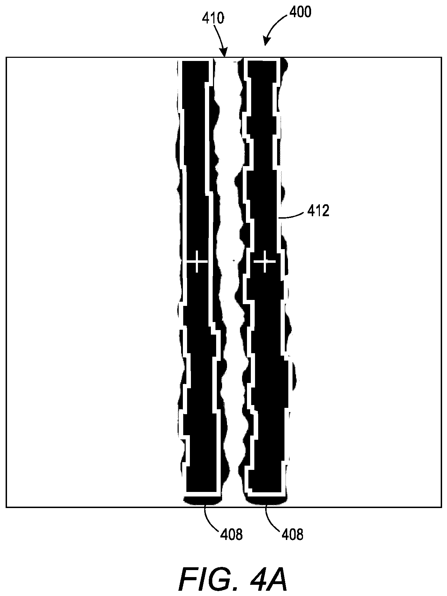

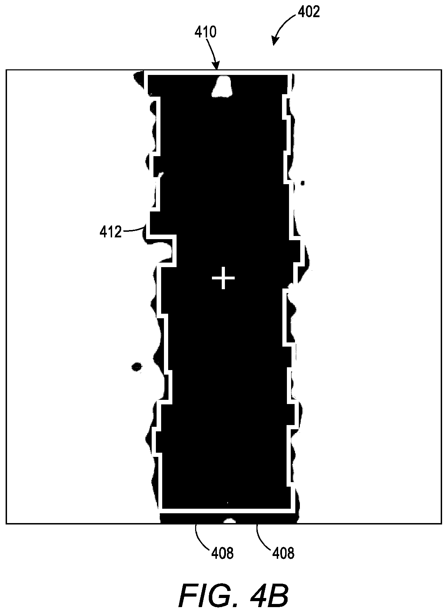

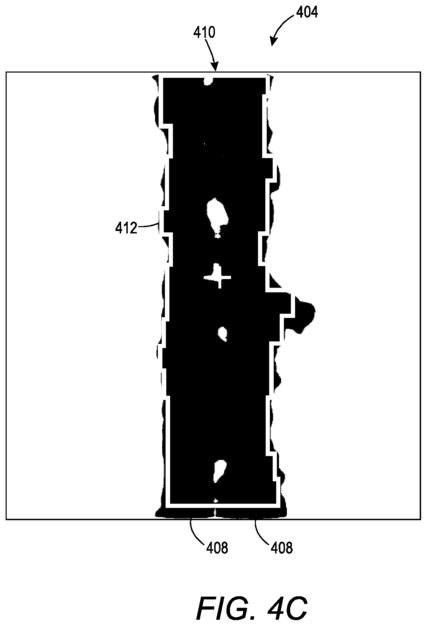

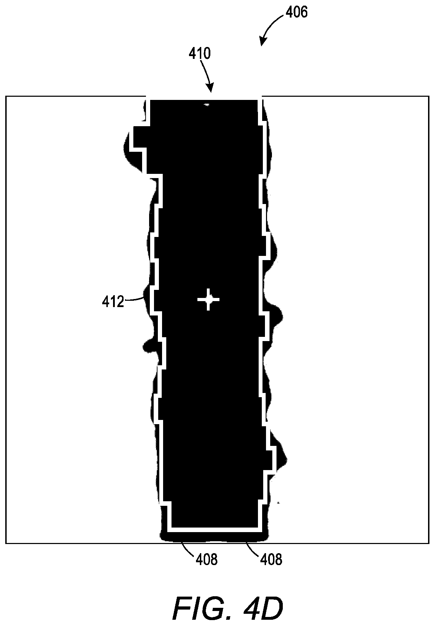

FIGS. 4A-4D are enlarged images of examples of two single pixel dashes, three pixels apart, on a variety of printing media examples, in accordance with the present disclosure. FIGS. 4A-4D demonstrate two single pixel dashes 3 pixels apart on a variety of medias. A first example 400 a pinning media, in this example Red River Colorjet 26 lb (FIG. 4A) includes a media which immobilizes a drop as it interacts with the media and therefore can be used to simulate how the ink would behave with a primer layer underneath of it. As can be seen on such media the two dashes printed using a colored ink 408 are detected as separate with a simple line detection algorithm on a QEA PIAS II instrument. On other medias, coated or otherwise, which use the exact same image, the result is detected as a single dash. This would be typical behavior when a priming solution is not applied underneath the ink. As shown in FIG. 4B, a second example 402 using sterling ultra web matte media, an offset coated glossy media, is shown. In FIG. 4C, a third example 404 using Vividjet, an uncoated inkjet treated media and in FIG. 4D, a fourth example 406 using a McCoy an offset glossy media are depicted. In each, the dashes printed using a colored ink 408 are shown, and also indicate where n expected gap 410 between the dashes printed using a colored ink 408 should be located. An indicating line 412 shows a border determined by the QEA PIAS II instrument image analysis software used to measure and determine the existence of the predetermined space between an expected gap 410 and one or more dashes 408 printed using colored ink.

It should be noted that the specific properties and behavior of the ink compositions used in this method can also play a functional role in determining the effectiveness of the second predetermined pattern when the ink is deposited onto the first predetermined pattern of primer. Different ink compositions may require different droplet sizes, distributions, and printhead configurations to achieve optimal performance. It is functional to carefully evaluate the properties of each ink composition and adjust the second pattern accordingly to ensure accurate detection of any misalignments or missing jets during printing. The use of a precoat solution in this method can also have a functional impact on the effectiveness of the second predetermined pattern. By applying a uniform layer of primer onto the diagnostic media, it is possible to create a more consistent and reliable reference pattern for comparison with the printed image. This can help ensure that any misalignments or missing jets are easily detected during the printing process, allowing for prompt corrective action to be taken as needed.

While the present teachings have been illustrated with respect to one or more implementations, alterations and/or modifications may be made to the illustrated examples without departing from the spirit and scope of the appended claims. For example, it may be appreciated that while the process is described as a series of acts or events, the present teachings are not limited by the ordering of such acts or events. Some acts may occur in different orders and/or concurrently with other acts or events apart from those described herein. Also, not all process stages may be required to implement a methodology in accordance with one or more aspects or embodiments of the present teachings. It may be appreciated that structural objects and/or processing stages may be added, or existing structural objects and/or processing stages may be removed or modified. Further, one or more of the acts depicted herein may be carried out in one or more separate acts and/or phases. Furthermore, to the extent that the terms "including," "includes," "having," "has," "with," or variants thereof are used in either the detailed description and the claims, such terms are intended to be inclusive in a manner similar to the term "comprising." The term "at least one of" is used to mean one or more of the listed items may be selected. Further, in the discussion and claims herein, the term "on" used with respect to two materials, one "on" the other, means at least some contact between the materials, while "over" means the materials are in proximity, but possibly with one or more additional intervening materials such that contact is possible but not required. Neither "on" nor "over" implies any directionality as used herein. The term "conformal" describes a coating material in which angles of the underlying material are preserved by the conformal material. The term "about" indicates that the value listed may be somewhat altered, as long as the alteration does not result in nonconformance of the process or structure to the illustrated embodiment. The terms "couple," "coupled," "connect," "connection," "connected," "in connection with," and "connecting" refer to "in direct connection with" or "in connection with via one or more intermediate elements or members." Finally, the terms "exemplary" or "illustrative" indicate the description is used as an example, rather than implying that it is an ideal. Other embodiments of the present teachings may be apparent to those skilled in the art from consideration of the specification and practice of the disclosure herein. It is intended that the specification and examples be considered as exemplary only, with a true scope of the present teachings being indicated by the following claims.

## Claims

1. A method for detecting missing or misdirected jets in a drop on demand delivery system for media priming in an inkjet printing application, comprising:
passing a diagnostic media in proximity to a first printhead comprising a plurality of ejector jets;
firing each of the plurality of ejector jets onto the diagnostic media;
depositing a precoat solution onto the diagnostic media in a first predetermined pattern;
passing the diagnostic media in proximity to at least a second printhead comprising a plurality of ejector jets;
depositing a plurality of droplets of at least one ink compositions onto the diagnostic media in a second predetermined pattern; and
capturing an image of a printed pattern on the diagnostic media.

2. The method for detecting missing or misdirected jets in a drop on demand delivery system for media priming in an inkjet printing application of claim 1, further comprising:
analyzing the printed pattern of the captured image; and
comparing the printed pattern of the captured image to the second predetermined pattern.

3. The method for detecting missing or misdirected jets in a drop on demand delivery system for media priming in an inkjet printing application of claim 1 or claim 2, further comprising performing a maintenance procedure to correct a primer printhead defect.

4. The method for detecting missing or misdirected jets in a drop on demand delivery system for media priming in an inkjet printing application of claim 3. wherein the maintenance procedure to correct a primer printhead defect comprises cleaning a face of the first printhead, performing a maintenance jetting procedure using the first printhead, flushing the first printhead, replacing the first printhead, or a combination thereof.

5. The method for detecting missing or misdirected jets in a drop on demand delivery system for media priming in an inkjet printing application of any of the preceding claims, wherein the image of the printed pattern on the diagnostic media is captured with a scanner that is inline with respect to a printing process path.

6. The method for detecting missing or misdirected jets in a drop on demand delivery system for media priming in an inkjet printing application of any of the preceding claims, wherein the diagnostic media further comprises a trigger pattern configured to send a signal to an inline scanner.

7. The method for detecting missing or misdirected jets in a drop on demand delivery system for media priming in an inkjet printing application of any of the preceding claims, wherein the diagnostic media comprises uncoated paper.

8. The method for detecting missing or misdirected jets in a drop on demand delivery system for media priming in an inkjet printing application of any of the preceding claims, wherein the first predetermined pattern comprises a plurality of dashes.

9. The method for detecting missing or misdirected jets in a drop on demand delivery system for media priming in an inkjet printing application of claim 8, wherein the dashes are parallel lines;
optionally wherein the parallel lines are from about 2 to about 5 pixels apart from one another.

10. The method for detecting missing or misdirected jets in a drop on demand delivery system for media priming in an inkjet printing application of claim 8, wherein the dashes are not parallel lines;
optionally wherein the dashes are from about 2 to about 20 pixels apart from one another.

11. The method for detecting missing or misdirected jets in a drop on demand delivery system for media priming in an inkjet printing application of any of the preceding claims, wherein the first predetermined pattern and the second predetermined pattern are the same.

12. The method for detecting missing or misdirected jets in a drop on demand delivery system for media priming in an inkjet printing application of any of the preceding claims, wherein depositing a plurality of droplets of at least one ink compositions onto the diagnostic media in a second predetermined pattern comprises depositing a plurality of droplets of at least four ink compositions.

13. The method for detecting missing or misdirected jets in a drop on demand delivery system for media priming in an inkjet printing application of any of the preceding claims,
wherein the first predetermined pattern comprising a plurality of dashes;
wherein the second predetermined pattern comprises a plurality of dashes that is the same as the first predetermined pattern;
and wherein the method further comprises:
capturing an image of a printed pattern on the diagnostic media;
analyzing the printed pattern of the captured image; and
comparing the printed pattern of the captured image to the second predetermined pattern.

14. The method for detecting missing or misdirected jets in a drop on demand delivery system for media priming in an inkjet printing application according to any of the preceding claims,
wherein the depositing a plurality of droplets comprises depositing a plurality of droplets of at least four ink compositions onto the diagnostic media in a second predetermined pattern that comprises a composite image;
and wherein the method further comprises capturing an image of a printed pattern on the diagnostic media.

15. The method for detecting missing or misdirected jets in a drop on demand delivery system for media priming in an inkjet printing application of any of the preceding claims, wherein the precoat solution comprises 5 % wt to 40 % wt of a salt in an aqueous solution based on a total weight of the aqueous solution.
